Europäisches Patentamt

European Patent Office

Office européen des brevets

(11) Veröffentlichungsnummer: **0 212 177**
**A2**

# (12) EUROPÄISCHE PATENTANMELDUNG

(21) Anmeldenummer: **86109141.1**

(22) Anmeldetag: **04.07.86**

(30) Priorität: **14.08.85 DE 3529170**

(43) Veröffentlichungstag der Anmeldung:
**04.03.87 Patentblatt 87/10**

(84) Benannte Vertragsstaaten:
**AT BE CH DE FR GB IT LI NL SE**

(51) Int. Cl.⁴: **H04Q 3/545**

(71) Anmelder: **Siemens Aktiengesellschaft Berlin
und München
Wittelsbacherplatz 2
D-8000 München 2(DE)**

(72) Erfinder: **Muyssen, John
Draaitopstrasse 61
BE-9050 Evergem(BE)**

(54) Verfahren zur Aktivierung von Ablauffolgen in einem Informationen verarbeitenden System, inbes. in einem Fernsprechvermittlungssystem.

㊻ Abhängig vom Systemzustand oder vom Gerätezustand, der sich aufgrund eines bestimmten Anreizes einstellt, werden z.B. in einem Vermittlungssystem bestimmte Ablauffolgen aktiviert. Eine derartige Ablauffolge wird nun nicht bereits während des Übergans von einem Ausgangszustand (A1) in den dadurch bedingten Endzustand (FZ) durch einzelne unterschiedliche Programmeinheiten ausgelöst, sondern es ist eine jede Ablauffolge in einem zentralen Programmteil (T) enthalten. Dieser kann bei Vorliegen eines jeden den gleichen Folgezustand bedingenden Ausgangszustandes aufgerufen werden. Ein dementsprechender Aufruf erfolgt immer erst dann, wenn der Folgezustand (FZ) tatsächlich eingenommen ist. Dadurch ergibt sich ein geringerer Programmieraufwand, eine einfache Änderbarkeit und eine Verringerung der Fehlermöglichkeit.

FIG 2

EP 0 212 177 A2

## Verfahren zur Aktivierung von Ablauffolgen in einem Informationen verarbeitenden System, insbes. in einem Fernsprechvermittlungssystem

Die Erfindung betrifft ein Verfahren zur Aktivierung von Ablauffolgen in einem System, in dem intern erzeugte und/oder über perihpere Einheiten aufgenommene Informationen verarbeitet werden und in dem ausgehend von mehreren erreichbaren unterschiedlichen Zuständen ein anderer eindeutig festgelegter Folgezustand eingenommen wird, an dem die Ablauffolge unmittelbar gekoppelt ist und wobei die Verarbeitung der Informationen, die Einstellung und die Bewertung der verschiedenen Zustände sowie die Aktivierung der Ablauffolge von einer Steuereinrichtung bewirkt wird, die Zugriff zu Speicheranteilen hat, in denen die Programm-und Steuerdateninformationen abgelegt sind, wobei das System vorzugsweise ein Fernsprechvermittlungssystem darstellt, bei dem die Ausgangszustände unter anderem durch eine Bedientätigkeit an einer Endeinrichtung entstehen und als Folgezustand ein bestimmter vermittlungstechnischer Zustand anzusehen ist.

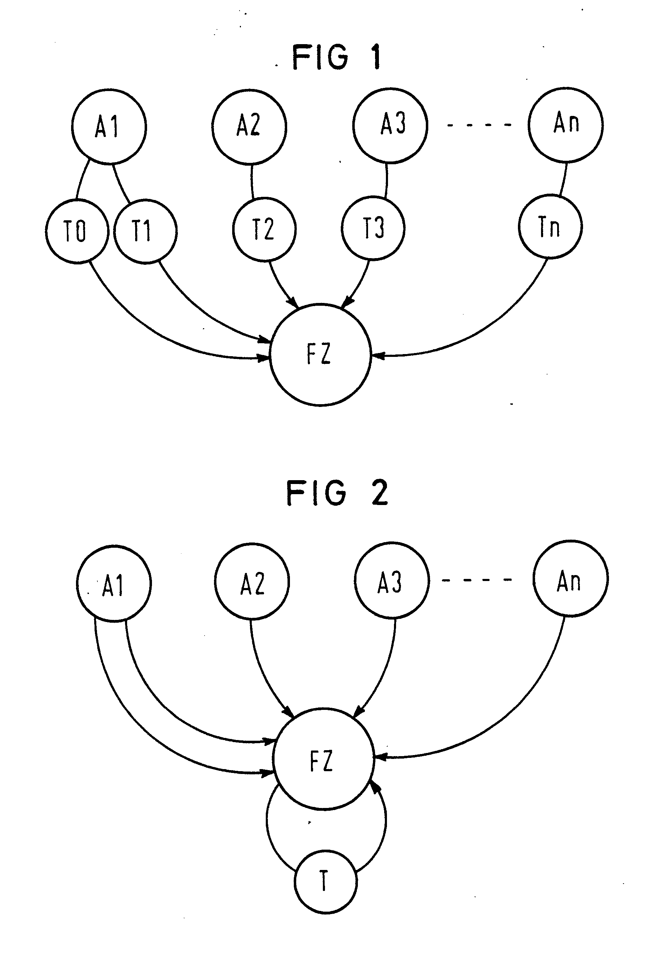

In verschiedenen Systemen, in denen Informationen verarbeitet werden, beispielsweise in einem Meßsystem oder einem Fernsprechvermittlungssystem bedingen gegebenenfalls eine Vielzahl von unterschiedlichen Zuständen einen bestimmten Folgezustand, an den bestimmte auszuführende Tätigkeiten gekoppelt sind. Diese Tätigkeiten sind eine Folge des Zustandes, den das System bzw. eine ihrer peripheren Einheiten aufgrund eines entsprechenden Anreizes einnimmt. In einem Fersprechvermittlungssystem gibt es beispielsweise viele Situationen, die zu einem Besetztzustand führen. Mit einem solchen Besetztzustand ist das Anschalten des Besetztones an den jeweiligen Verbindungsweg, sowie die Freigabe eines Wahlaufnahmesatzes und sonstiger zentraler Ressources, wie sie beispielsweise Speicher und Empfänger darstellen verknüpft. In einem Fernsprechvermittlungssystem stellt sich beispielsweise der Rufzustand, um ein weiteres Beispiel zu nennen, bei mehreren unterschiedlichen Ausgangszuständen ein. Als solche Ausgangszustände seien beispielhaft die Anrufumleitung, die Rufweiterschaltung, der Ruf eines Sammelanschlusses und der Ruf der Nachtnebenstelle genannt. Mit jedem Rufzustand ist als zugeordnete Tätigkeit die Aussendung der Rufsignale gekoppelt. Es ist nun üblich, daß eine solche Tätigkeit wie beispielsweise das Aussenden der Signale während des Übergangs von einem solchen Ausgangszustand in den dadurch bedingten Folgezustand aktiviert wird. Dieses in der geschilderten Weise bei zustandsgesteuerten Systemen angewendete Verfahren ist durch die FIG 1 veranschaulicht. Die mit A1 bis An bezeichneten Kreise sollen mögliche Ausgangszustände symbolisieren, die jeweils zu dem Folgezustand FZ führen. Dieser Folgezustand ist nicht nur durch unterschiedliche Ausgangszustände zu erreichen, sondern er kann sich unter Zugrundelegung eines bestimmten Ausgangszustands, z.B. des Ausgangszustandes A 1, auch durch unnterschiedliche Konfigurationen oder Wege einstellen. Da bei dem bekannten Verfahren die mit dem Folgezustand FZ gekoppelten Tätigkeiten bzw. Ablauffolgen TO bis Tn beim Übergang zu diesem Folgezustand aktiviert werden, ist für jeden Ausgangszustand gesondert ein diese Tätigkeit bzw. die betreffende Ablauffolge beinhaltender Programmabschnitt vorgesehen. Das gleiche gilt für jeden möglichen Weg, der von einem bestimmten Ausgangszustand zu den betreffenden Folgezustand FZ führt. Bei dem Übergang von dem Ausgangszustand in den Folgezustand wird dann das jeweilige Programm aufgerufen. Die damit ausgelösten Tätigkeiten bzw. Ablauffolgen führen dann jeweils zu dem gleichen Ziel, z.B. zum Anlegen eines bestimmten Hörtones. Unter der Annahme, daß n Ausgangszustände zu einem Folgezustand FZ führen muß dann n-mal die betreffende Ablauffolge, z.B. die Tonsteuerung, aufgerufen werden. Da der betreffende Programmabschnitt für jeden möglichen Zustandsübergang getrennt vorhanden ist, erhöht sich dementsprechend die Fehlermöglichkeit und der Aufwand für die programmäßige Erstellung der zugeordneten Tätigkeit bzw. der zugeordneten Ablauffolge.

Es ist die Aufgabe der Erfindung das Verfahren zur Aktivierung von Ablauffolgen in einem zustandsgesteuerten System zu verbessern. Dies wird dadurch erreicht, daß eine jede Ablauffolge in einem zentralen Programmtiel enthalten ist, der bei Vorliegen eines jeden den gleichen Folgezustand bedingenden Ausgangszustandes aufgerufen werden und daß ein dementsprechender Aufruf immer erst dann erfolgt, wenn der Folgezustand tatsächlich eingenommen ist.

Dadurch, daß erfindungsgemäß erst abgewartet wird bis der Folgezustand tatsächlich erreicht wird und erst dann die daran gekoppelte Ablauffolge aus einem zentral vorhandenen Programmteil aufgerufen wird, werden Fehlerquellen ausgeschaltet und es verringert sich der notwendige Aufwand. Darüberhinaus können Änderungen in einfacher Weise vorgenommen werden.

Die Erfindung wird anhand der Figuren erläutert. Durch die FIG 1 wird das vorangehend beschriebene bekannte Verfahren und durch die FIG 2 das erfindungsgemäße Verfahren veranschaulicht.

Aus der FIG 2 ist zu entnehmen, daß nicht bei jedem Übergang von einem Ausgangszustand A zu einem Folgezustand FZ eine bestimmte Ablauffolge bzw. Tätigkleit aktiviert wird, sondern daß erst nach dem Erreichen des Folgezustandes FZ über ein nachgeschaltetes Programmteil diese Ablauffolge bzw. Tätigkeit aufgerufen wird. Ist demnach für einen der Ausgangszustände A1 bis An im Zusammenhang mit dem Folgezustand FZ die betreffende Ablauffolge aktivierbar, so kann man davon ausgehen, daß dies dann in gleicher Weise für alle übrigen Ausgangszustände zutrifft. Bei dem bekannten Verfahren mit mehreren die gleiche Tätigkeit betreffenden Programmteilen ist diese Sicherheit nicht gegeben. Der Programmansprung für das Programm das bezogen auf die möglichen Ausgangszustände die jeweilige Ablauffolge beinhaltet ist also abhängig vom Erreichen des Zustandes FZ. Für die Ablauffolgen bzw. die Tätigkeiten, die ausgehend von unterschiedlichen Zuständen A aktiviert werden, wird somit eine Programmoptimierung aufgrund des vorgesehenen zentralen Zugriffs erreicht.

Ist das System ein Fernsprechvermittlungssystem so bewirkt diese Ablauffolge T häufig die Anschaltung von Hörtönen bzw. die Anschaltung von Rufsignalen. Dies kann jeweils durch mehrere unterschiedliche Ausgangszustände verursacht werden. Als derartige Hörtöne seien der sogenannte Freiton, der Besetztton oder die Quittungstöne genannt. Der vermittlungstechnische Zustand, der einen Freiton bedingt, wird beispielsweise erreicht, wenn durch einen Teilnehmer eine normale Wahl nach Abheben vorgenommen wird oder wenn in Rückfrage angewählt wird. Jedesmal wird die daran gekoppelte und zentral abgespeicherte Ablauffolge, nämlich die Anschaltung des sogenannten Freitones aktiviert. Es gibt in einem Vermitt lungssystem eine Vielzahl von Zuständen, die das Anlegen des Besetzttones erfordern. Dies ist beispielsweise bei der Vornahme einer falschen Prozedur, bei der Einwahl einer falschen Kennzahl der Fall, oder wenn der Teilnehmer für ein angefordertes Leistungsmerkmal nicht berechtigt ist. Wählt der Teilnehmner beispielsweise eine Kennzahl, so soll der Zustand A1 damit festgelegt sein. Der in diesem Zustand ausgelöste Anreiz, z.B. Wahl einer bestimmten Ziffer, führt dann in den Folgezustand FZ falls hierfür keine Berechtigung vorliegt. Dieser Folgezustand soll beispielsweise den Besetztzustand darstellen. Dieser Besetztzustand wird auch, wie bereits geschildert, durch weitere Ausgangszustände in gleicher Weise erreicht. Unabhängig davon, welcher Ausgangzustand zu diesem Besetztzustand führt, wird über die zentralabgespeicherte Ablauffolge T, die demnach die Anschaltung eines Besetztones betrifft, diese Anschaltung veranlasst.

Die Ablauffolge T kann auch die Anschaltung eines Quittungstones betreffen, falls durch die Aktivierung von vorgesehenen Leistungsmerkmalen, wie beispielsweise Anrufschutz, Anrufumleitung usw. als Folgezustand FZ der Quittungstonzustand erreicht ist. Ausgangszustand ist in solchen Fällen der Wahlzustand, in dem dann jeweils ein bestimmtes Leistungsmerkmal angefordert wird. Das erfindungsgemäße Verfahren ist bezogen auf ein Fernsprechvermittlungssystem in gleicher Weise auf andere in ihm vorgesehene und an bestimmte Zustände gekoppelte Ablauffolgen, die beispielsweise andere Signalisierungen oder die Freigabe zentraler Speichereinheiten oder Empfangseinheiten auslösen, einzusetzen.

## Ansprüche

Verfahren zur Aktivierung von Ablauffolgen in einem System, in dem intern erzeugte und/oder über periphere Einheiten aufgenommene Informationen verarbeitet werden und in dem ausgehend von mehreren erreichbaren unterschiedlichen Zuständen ein anderer eindeutig festgelegter Folgezustand eingenommen wird, an dem die Ablauffolge unmittelbar gekoppelt ist und wobei die Verarbeitung der Informationen, die Einstellung und die Bewertung der verschiedenen Zustände sowie die Aktivierung der Ablauffolge von einer Steuereinrichtung bewirkt wird, die Zugriff zu Speicheranteilen hat, in denen die Programm-und Steuerdateninformationen abgelegt sind, wobei das System vorzugsweise ein Fernsprechvermittlungssystem darstellt, bei dem die Ausgangszustände unter anderem durch eine Bedientätigkeit an einer Endeinrichtung entstehen und als Folgezustand ein bestimmter vermittlungstechnischer Zustand anzusehen ist, **dadurch gekennzeichnet** , daß eine jede Ablauffolge in einem zentralen Programmteil enthalten ist, der bei Vorliegen eines jeden den gleichen Folgezustand (T) bedingenden Ausgangszustandes (A1 bis An) aufgerufen werden kann und daß ein dementsprechender Aufruf immer erst dann erfolgt, wenn der Folgezustand (FZ) tatsächlich eingenommen ist.

# FIG 1

# FIG 2